# EUROPÄISCHE PATENTSCHRIFT

(11) **EP 0 444 333 B1**
(45) Veröffentlichungstag und Bekanntmachung des Hinweises auf die Patenterteilung: **22.09.1993**
(21) Anmeldenummer: 90250316.8
(22) Anmeldetag: 19.12.1990
(51) Int. Cl.: C05F 17/02, B65D 88/12, B65D 90/00

(54) **Mobiler Rottebehälter**
Mobile compost container
Récipient de compost mobile

(30) Priorität: 19.02.1990 DE 4005535
(43) Veröffentlichungstag der Anmeldung: 04.09.1991
(73) Patentinhaber: METALLGESELLSCHAFT Aktiengesellschaft, 60015 Frankfurt (DE)
(72) Erfinder: Dolle, Lothar, W-4690 Herne 1 (DE); Strobach, Karl, W-4100 Duisburg 29 (DE); Vollmer, Friedel, Dipl.-Ing., W-4690 Herne 2 (DE)
(74) Vertreter: Meissner, Peter E., Dipl.-Ing.

(56) Entgegenhaltungen:
- EP-A- 0 253 386
- US-A- 4 545 523

## Beschreibung

Die Erfindung betrifft einen mobilen Rottebehälter in geschlossener Containerform gemäß dem Oberbegriff des Patentanspruchs 1.

Derartige Rottebehälter erfüllen in einem modernen Abfallwirtschaftskonzept wichtige Aufgabe im Rahmen des Verwertungsgebotes fermentierbarer organischer Abfälle. Von besonderem Vorteil ist dabei die containerförmige (quaderförmige) Bauweise dieser Rottebehälter, die eine einfache Handhabung des Rottegutes gestatten, weil sie nicht nur bei Bedarf für die Zeit des Rottevorgangs übereinander stapelbar sind und somit wenig Grundfläche beanspruchen, sondern auch mittels verschiedener Hebe- und Transportsysteme (z.B. LKW-Abrollkipper, Kranbahn, Brückenkran, Containerkran usw.) bewegbar und entleerbar sind.

Aus WLB 5 (1989), Seite 53, sind Rottebehälter einer realisierten Kompostieranlage bekannt, die gattungsgemäß äußerlich die Form eines Containers aufweisen. Die Beladung dieser Rottebehälter erfolgt durch eine einseitig mit Scharnieren befestigte Beladeluke im Dach des Containers, ihre Entladung durch eine ausschwenkbare Entladeluke an einer Schmalseite des Containers, die ebenfalls unmittelbar über Scharniere oben an der Außenseite des Containers befestigt ist.

Im Bereich der Entladeluke sind auch die Anschlußstutzen für die Zu- und Ableitung der für eine Schnellkompostierung benötigten Kompostierluft angeordnet. Der Boden des Rottebehälters ist als Doppelboden ausgeführt, dessen oberer Teil ein durchgehendes Bodenblech (Lochblech) mit kreisförmigen Luftlöchern ist. Dieses Lochblech ist fest mit dem Container verbunden. Der Hohlraum unter dem Lochblech steht für die Zu- oder Ableitung der Kompostierluft mit einem der Luftanschlußstutzen in Verbindung.

Bei einer Luftführung von oben nach unten sammelt sich in dem Hohlraum unter dem Lochblech auf dem unteren Bodenblech Kondenswasser und gegebenenfalls auch Sickerwasser. Dies gelangt in die Rohrleitung der Luftableitung und muß dort abgelassen werden, wozu ein entsprechender manueller Eingriff erforderlich ist. Ein weiterer Nachteil der bekannten Rottebehälters ist darin zu sehen, daß die Luken für das Be- und Entladen des Rottebehälters gelegentlich während der Kompostierphase trotz einer Verriegelung nicht luftdicht abgeschlossen sind und daher Störungen in der Luftführung bzw. unter Umständen auch Geruchsbelästigungen verursachen.

Aufgabe der Erfindung ist es daher, einen gattungsgemäßen Rottebehälter so zu verbessern, daß diese Nachteile weitgehend vermieden werden.

Gelöst wird diese Aufgabe bei einem gattungsgemäßen Rottebehälter durch die kennzeichnenden Merkmale des Patentanspruchs 1. Vorteilhafte Weiterbildungen des erfindungsgemäßen Rottebehälters ergeben sich aus den Unteransprüchen 2 bis 9.

Im folgenden wird die Erfindung anhand des in den Figuren 1 bis 5 dargestellten Rottebehälters näher beschrieben. Es zeigen:
- Fig. 1: eine Seitenansicht eines Rottebehälters,
- Fig. 2: einen Querschnitt durch den Rottebehälter,
- Fig. 3: eine Draufsicht auf den Rottebehälter,
- Fig. 4: eine Ansicht von der Entladeseite des Rottebehälters,
- Fig. 5: einen Teilschnitt im Bereich der Entladeluke.

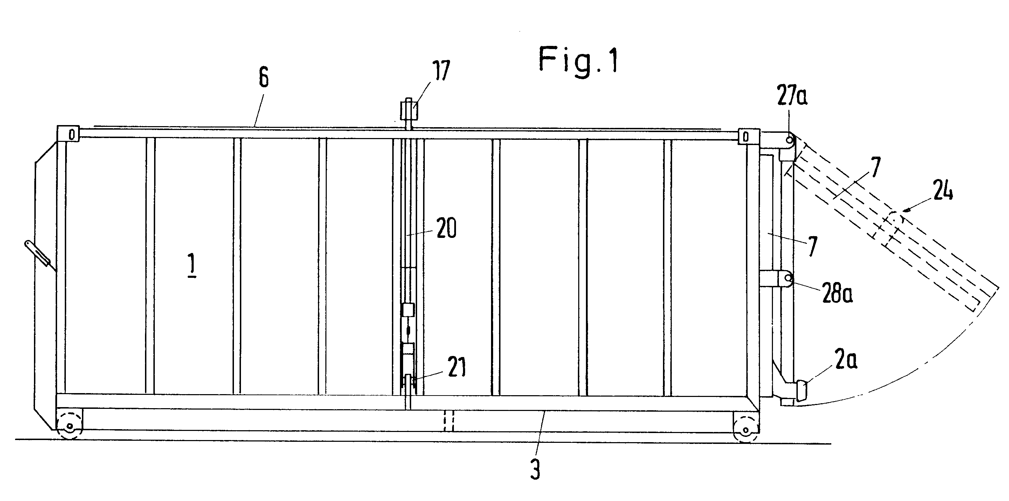

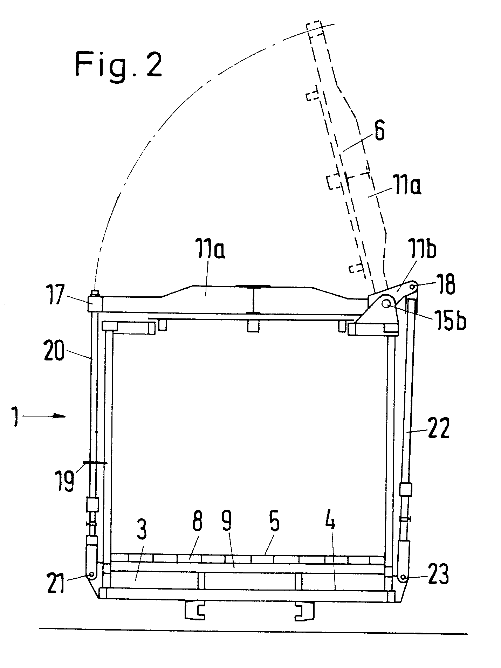

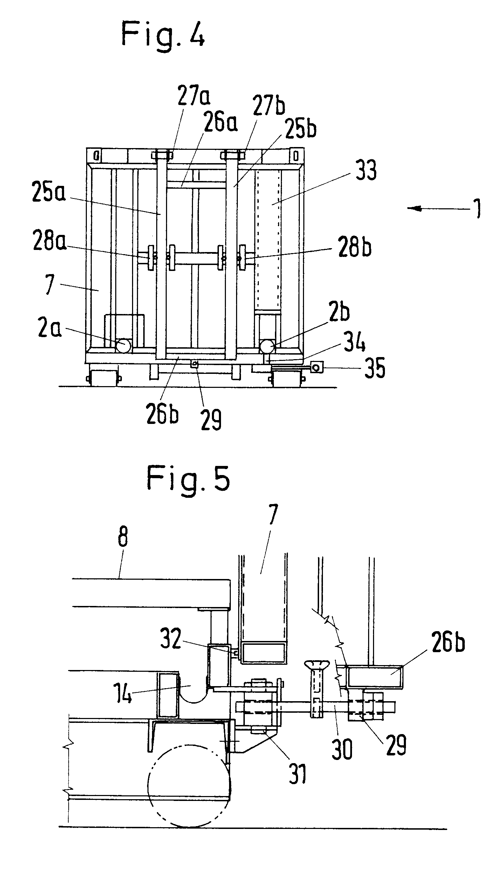

Der in Figur 1 dargestellte mobile Rottebehälter ist in verwindungssteifer Profilstahl-Stahlblech-Konstruktion ausgeführt und zur Wärme- und Kältedämmung allseitig mit einer 40 mm dicken Isolierung mit verzinktem Stahlblechmantel versehen. Am Boden 3 sind Rollen angebracht, so daß er als Abrollcontainer z.B. mittels eines Hakenabroll-LKW transportiert werden kann. Bei z.B. Krantransport mit einem Containergeschirr (spreader) kann auf die Rollen selbstverständlich verzichtet werden. Der Boden 3 ist, wie in Figur 2 und 4 erkennbar ist, als Doppelboden ausgebildet, d.h. er weist unten ein durchgehendes Bodenblech 4 und einen im Abstand darüber angeordneten Lochboden 5 auf. Zwischen dem Bodenblech 4 und dem Lochboden 5 ist ein Hohlraum gebildet, durch den die benötigte Kompostierluft für die Schnellkompostierung zu- oder abgeleitet werden kann. Dieser Hohlraum steht daher in Verbindung mit einem Anschlußstutzen 2a für die Zu- oder Ableitung der Luft. Ein zweiter Luftanschluß 2b ist auf gleicher Höhe wie der Anschlußstutzen 2a angeordnet (Fig. 4) und steht mit dem oberen Teil des Containerinneren über einen Luftschacht mit vorzugsweise abnehmbarem Revisionsdeckel 33 in Verbindung.

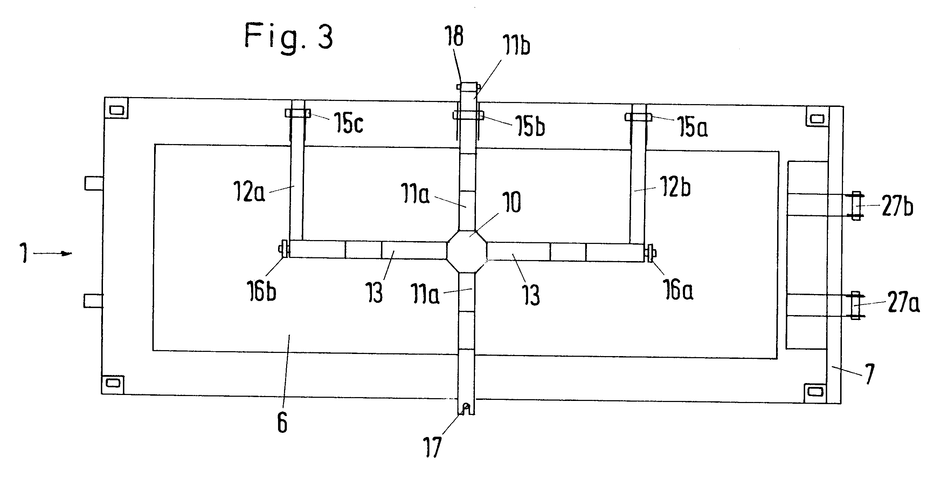

Die Beladung des Rottebehälters 1 erfolgt durch eine aufstellbare Beladeluke 6 (Figur 2, 3), die Entladung durch eine ausschwenkbare Entladeluke 7 (Figur 1).

Der Lochboden 5 besteht, wie in Figur 2 angedeutet ist, aus einer Vielzahl von U-Profilen 8, die dicht nebeneinander angeordnet sind und lose auf Querträgern 9 ruhen. Diese Querträger 9 sind mittels Stützen im Abstand vom unteren Bodenblech 4 festgeschweißt. Die U-Profile 8 weisen in ihren oben liegenden Mittelstegen zahlreiche Luftlöcher (nicht dargestellt) zur Belüftung der zu kompostierenden organischen Substanz auf, ruhen mit ihren Seitenstegen auf den Querträgern 9 und weisen mit ihrer Längsachse in Richtung der Entladeluke 7.

Durch diese Anordnung werden mehrere Vorteile erzielt. Zum einen ist die Fläche der Mittelstege mit den Luftlöchern in vollem Umfang von Kompostierluft durchströmbar, d.h. es gibt keine Stellen, an denen Luftlöcher durch die Auflage auf einem Querträger 9 versperrt wären. Durch die auf den Kopf gelegten U-Profile 8 wird daher eine effektive und gleichmäßige Kompostierung ermöglicht. Zum anderen erlaubt die lose Auflage der U-Profile 8 ein rasches Freilegen des Hohlraums im Doppelboden 3, ohne daß hierzu irgendwelche Verbindungen gelöst werden müßten. Dadurch wird die Reinigung des Rottebehälters 1 in diesem Bereich ganz erheblich vereinfacht und auch ein problemloses Austauschen von U-Profilen 8 ermöglicht. Darüberhinaus erleichtert die Orientierung der Längsachse der U-Profile 8 ein glattes Herausrutschen des Kompostes beim Entleeren des Rottebehälters 1.

Im Unterschied zum Stand der Technik ist die Beladeluke 6 (Fig. 3), die sich nahezu über die gesamte Dachfläche des Containers 1 erstreckt und selbstverständlich auch in mehrere einzelne Luken unterteilt sein könnte, nicht direkt über Scharniere an der Außenseite des Rottebehälters 1 befestigt. Sie ist vielmehr an einem flachen Spannrahmen 10 angehängt, der in dem gezeigten Ausführungsbeispiel aus dem Kreuz eines Mittelträgers 11a und eines Längsträgers 13 gebildet ist, an dessen Enden jeweils ein parallel zum Mittelträger 11a verlaufender Querträger 12a bzw. 12b angeschweißt ist. Der Längsträger 13 liegt etwa parallel über der Längsachse der Beladeluke 6 und endet jeweils in einem Abstand von etwas weniger als einem Viertel der Beladelukenlänge von einer Schmalseite der Beladeluke 6 entfernt. Im Bereich dieser Enden des Längsträgers 13 ist die Beladeluke 6 über Drehgelenke 16a, b an den Spannrahmen 10 angehängt. Die freien Enden der beiden Querträger 12a, b und das auf gleicher Seite liegende eine Ende des Mittelträgers 11a sind durch Drehgelenke 15a, b, c an einer Längsseite oben am Dach des Rottebehälters 1 befestigt. Daher kann die Beladeluke 6 mit Hilfe des Spannrahmens 10 um die Drehachse dieser Gelenke 15a, b, c geschwenkt und dadurch geöffnet werden. Damit dieses öffnen erleichtert wird und eine gesicherte Offenstellung der Beladeluke 6 während der Beladung gewährleistet ist, weist der Mittelträger 11a eine Verlängerung 11b auf, die über die Längsseite des Rottebehälters 1 hinausreicht und an deren freiem Ende über ein Drehgelenk 18 eine Hubvorrichtung 22 angreift. Diese Hubvorrichtung 22 ist im Ausführungsbeispiel (Fig. 2) als Spindeltrieb in der Art eines Spannschlosses ausgeführt und über ein weiteres Drehgelenk 23 unten an der Außenseite des Containers 1 befestigt. Beim Drehen der Spindel verkürzt oder verlängert sich je nach Drehrichtung die wirksame Länge dieser Hubvorrichtung 22 zwischen den Gelenken 18 und 23, so daß eine entsprechende Schwenkbewegung des zweiarmigen Hebels 11a, 11b um die Achse des Drehgelenkes 15b bewirkt wird. Bei Stillstand der Spindel bleibt somit auch die an dem Spannrahmen 11 hängende Beladeluke 6 in einer bestimmten Stellung stehen.

Die Drehung der Spindel kann z.B. einfach mit Hilfe einer Ratsche von Hand, aber auch durch einen Elektroantrieb oder ähnliches bewirkt werden. Es könnte als Hubvorrichtung 22 aber beispielsweise auch eine hydraulische oder pneumatische Kolben/Zylindereinheit vorgesehen sein. Der Schwenkbereich der Beladeluke 6 ist auf unter 90° (vorzugsweise etwa 75°) begrenzt, damit stets ein Rückstellmoment (infolge Schwerkrafteinwirkung) für ein problemloses Einleiten der Schließbewegung gegeben ist.

Wenn die Beladeluke 6 geschlossen ist, wird durch den Spannrahmen 10 ein dichter Verschluß sichergestellt. Hierzu weist das dem Drehgelenk 15b gegenüberliegende freie Ende des Mittelträgers 11a eine gabelförmige Spannkopfaufnahme 17 auf (Fig. 3). In diese Spannkopfaufnahme 17 kann der Spannkopf einer Spannvorrichtung 20 eingeschwenkt werden, die im Prinzip in entsprechender Weise wie die Hubvorrichtung 22 z.B. als ratschenbetätigter oder motorisch betätigter Spindeltrieb oder auch als hydraulische oder pneumatische Kolben/Zylindereinheit ausgebildet sein kann und wiederum in einem Drehgelenk 21 unten an der Außenseite des Containers 1 gelagert ist. Im ungespannten Zustand wird die Spannvorrichtung 22 durch einen Haltebügel 19 gegen Umfallen nach außen gesichert. Wenn die Spannvorrichtung 22 gespannt wird, d.h. ihre wirksame Länge zwischen dem in die Spannkopfaufnahme 17 eingeschwenkten Spannkopf und dem Drehgelenk 21 verkürzt wird, ergibt sich ein relativ gleichmäßiger Anpreßdruck der Entladeluke 6 gegen die entsprechenden Anlageflächen auf dem Dach des Containers 1. Dies wird dadurch erreicht, daß der Spannrahmen 10 den Anpreßdruck über die Drehgelenke 16a, b in die Beladeluke 6 einleitet. Durch deren symmetrische Anordnung bezüglich der Längs- und Querachse der Beladeluke 6 werden im Unterschied zu den bekannten Kompostiercontainern alle Ränder der Beladeluke 6 mit einem annähernd gleichen Anpreßdruck beaufschlagt.

Trotz der großen Abmessungen der Beladeluke 6 ergeben sich durch die Schließkräfte infolge ihrer "zentrischen" Einleitung über die Gelenke 16a, b keine unerwünschten Verformungen und Verwindungen, so daß ein luftdichtes Schließen erreicht werden kann. Der Dichteffekt wird zweckmäßigerweise durch eine umlaufende elastische Dichtung (z.B. aus Gummi) zwischen der Beladeluke 6 und der Dichtfläche auf dem Containerdach unterstützt. Dabei ist es vorteilhaft, wenn das Dichtungsprofil in einem anschraubbaren Hohlprofil an der Beladeluke 6 oder dem Containerdach gehalten wird. Die erfindungsgemäße Verlagerung der Scharniere 15a, b, c für die Beladeluke 6 in den Spannrahmen 10 verhindert ein Abrollen bzw. ungleichmäßiges Quetschen der Dichtung während des Schließvorgangs.

Um auch die Entladeluke 7, die sich etwa über die gesamte Schmalseite des Containers 1 erstreckt, dicht verschließen zu können, ist erfindungsgemäß eine Konstruktion vorgesehen, die derjenigen für die Beladeluke 6 weitgehend entspricht (Fig. 4). Die Entladeluke 7 ist über die beiden Drehgelenke 28a, b an einem Spannrahmen 24 angehängt. Der Spannrahmen 24 besteht wegen der kleineren Abmessungen der Entladeluke 7 lediglich aus zwei vertikalen Längsträgern 25a, b und zwei damit verschweißten kurzen horizontalen Querträgern 26a, b. Die Drehgelenke 28a, b sind entlang der horizontalen Mittelachse der Entladeluke 7 angeordnet und symmetrisch zu ihrer vertikalen Mittelachse positioniert. Der Abstand der beiden Gelenke 28a, b voneinander ist etwa genauso groß wie ihr jeweiliger Abstand von der nächstliegenden Seitenkante des Containers 1. Nach oben reichen die Längsträger 25a, b über die Begrenzung der Beladeluke 7 hinaus und enden in Drehgelenken 27a, b, die im Dachbereich des Containers 1 befestigt sind. Somit kann die Entladeluke 7 über den Spannrahmen 24 und die Drehgelenke 27a, b geschwenkt werden.

Dieser Effekt wird für die einfache Entladung des Rottebehälters 1 genutzt, indem das Rottegut nach der Schnellkompostierung durch entsprechende Schrägstellung des Containers 1 ausgekippt wird. Durch Schwerkrafteinwirkung schwingt die Entladeluke 7 dabei problemlos auf. Im Grundsatz wäre es auch möglich, die Drehachse der Entladeluke 7 seitlich anzuordnen. Dies wäre aber weniger vorteilhaft, da bei geringer Höhe der unteren Kante der Entladeseite des Containers 1 vom Erdboden die Entladeluke 7 gegen den Erdboden stoßen und eine vollständige öffnung behindern würde. Wesentlich im Sinne der Erfindung ist es, daß auch bei der Entladeluke 7 die Anpreßkräfte zum Schließen über den Spannrahmen 24 und die symmetrisch angeordneten Drehgelenke 28a, b "zentrisch" in die Entladeluke 7 eingeleitet werden, so daß in den Dichtflächen annähernd ein gleichmäßiger Anpreßdruck entsteht. Die Schließkräfte selbst werden wieder durch eine Spannvorrichtung 30 erzeugt. Diese entspricht funktional völlig der Spannvorrichtung 20. Die gabelförmige Spannkopfaufnahme 29 (Fig. 5) ist am unteren Querträger 26b angeschweißt. Um den Spannkopf der Spannvorrichtung 30 seitlich in die Spannkopfaufnahme 29 einschwenken zu können, ist die Drehachse des unten am Container 1 befestigten Drehgelenkes 31 der Spannvorrichtung 30 nicht horizontal wie bei der Spannvorrichtung 20 sondern vertikal angeordnet. In dem Ausführungsbeispiel in Figur 5 ist die Spannvorrichtung 30 als ratschenbetätigter Spindeltrieb dargestellt. In dieser Abbildung ist auch die von einer angeschraubten Profilschiene gehaltene umlaufende elastische Dichtung 32 erkennbar.

Aus Figur 5 geht auch hervor, daß das im Rottebehälter 1 auf dem unteren Bodenblech 4 anfallende Sicker- und Kondenswasser in einer Abwassersammelrinne 14 an der Seite der Entladeluke 7 ablaufen kann. Die Abwassersammelrinne 14 ist durch eine Leitung an einen Abwasserstutzen 35 (Fig. 4) angeschlossen. über ein 3-Wege-Ventil ist eine weitere Abwasserleitung 34 mit dem Abwasserstutzen 35 verbunden.

Die Abwasserleitung 34 leitet das gegebenenfalls in dem Luftschacht mit dem Revisionsdeckel 33 gebildete Kondenswasser aus dem siphonartig ausgebildeten unteren Teil dieses Luftschachtes mit dem Luftanschlußstutzen 2b ab. Derartiges Kondenswasser bildet sich regelmäßig, wenn die Luftführung im Rottebehälter eine Strömung von unten nach oben vorsieht. Bei dieser Betriebsweise ist dann der Ablauf der Abwasserablaufrinne 14 durch das (nicht dargestellte) 3-Wege-Ventil gesperrt, um einen Kurzschluß der Luftführung zwischen den beiden Luftanschlußstutzen 2a, b zu vermeiden. Bei umgekehrter Luftführung ist dagegen der Ablauf aus dem Siphon mit dem Luftanschlußstutzen 2b gesperrt und der Ablauf der Abwasserablaufrinne 14 offen. In diesem Fall kann sich Kondenswasser nur im Doppelboden 3 bilden, wo es zusammen mit gegebenenfalls anfallendem Sickerwasser abgeleitet wird. Die relativ hohe Bordkante hinter der Abwasserablaufrinne 14 zur Entladeluke 7 hin verhindert, daß dieses Wasser in den Luftanschlußstutzen 2a gelangen kann.

Das in den Figuren 1 bis 5 dargestellte Ausführungsbeispiel zeigt eine insbesondere für den LKW-Transport geeignete Containerversion. Diese weist daher auf der der Entladeklappe 7 gegenüberliegenden Seite einen Rundstahl-Aufnahmebügel (Fig. 1) sowie eine in die Abrollkufen unter dem Boden des Containers 1 integrierte Kippsicherung auf. Die Spannvorrichtung 20, 30 und die Hubvorrichtung 22 sind hierbei als handbetätigte umschaltbare Spindelratschen ausgeführt. Für einen Containerkranbetrieb sind die automatisch betätigbaren Versionen selbstverständlich vorteilhafter.

Mit dem erfindungsgemäß ausgebildeten containerförmigen Rottebehälter 1 wird nicht nur ein problemloses Be- und Entladen ermöglicht, sondern es wird auch ein ordnungsgemäßer Kompostierablauf sichergestellt, da die Be- und Entladeluken 6, 7 vollständig luftdicht verschließbar sind. Die hierzu vorgesehenen vorrichtungsmäßigen Maßnahmen sind außerordentlich einfach, kostengünstig und in ihrer Handhabbarkeit sicher.

## Patentansprüche

1. Mobiler Rottebehälter (1) in geschlossener Containerform (Quaderform) mit Anschlüssen (2a, 2b) für die Zu- und Ableitung von Luft, mit einem Doppelboden (3), der von einem unteren Bodenblech (4) und einem mit Abstand darüber angeordneten Lochboden (5) gebildet wird, mit einer Abwasserableitung aus dem Hohlraum des Doppelbodens (3) und mit mindestens einer Beladeluke (6) im Dach sowie mindestens einer Entladeluke (7) in einer Seitenwand des Containers,
dadurch gekennzeichnet,
- daß die Luken (6, 7) jeweils an einem Spannrahmen (10, 24) in Drehgelenken (16a, b, c bzw. 28a, b) aufgehängt sind,
- daß die Spannrahmen (10, 24) über Drehgelenke (15a, b, c bzw. 27a, b) am Außenmantel des Rottebehälters (1) gelagert sind,
- daß die Drehgelenke (16a, b, c bzw. 28a, b) jeweils entlang der Längsachsen der Luken (6 bzw. 7) und symmetrisch zu deren Querachsen angeordnet sind und
- daß Spannvorrichtungen (20, 30) vorgesehen sind, mit denen die Spannrahmen (10, 24) jeweils spannbar sind zur Erzeugung eines Dichtungsanpreßdruckes zwischen den Luken (6, 7) und den Auflageflächen der Luken (6, 7).

2. Rottebehälter nach Anspruch 1,
dadurch gekennzeichnet,
daß nur eine einzige große Beladeluke (6) vorgesehen ist mit zwei Drehgelenken (16a, b), die jeweils ein Viertel oder etwas weniger als ein Viertel der Länge der Beladeluke (6) von einer Schmalseite der Beladeluke (6) entfernt angeordnet sind.

3. Rottebehälter nach Anspruch 1 oder 2,
dadurch gekennzeichnet,
daß nur eine einzige Entladeluke (7) vorgesehen ist, die an einer Schmalseite des Rottebehälters (1) angeordnet und mit zwei Drehgelenken (28a, b) im Bereich der horizontalen Mittelachse der Entladeluke (7) versehen ist, wobei der Abstand der Drehgelenke (28a, b) voneinander etwa ein Drittel der Breite der Entladeluke (7) beträgt, und daß die Drehgelenke (27a, b) des Spannrahmens (24) oben am Rottebehälter (1) befestigt sind.

4. Rottebehälter nach einem der Ansprüche 1 bis 3,
dadurch gekennzeichnet,
daß die Spannvorrichtungen (20, 30) jeweils an einer den Drehgelenken (15a, b, c bzw. 27a, b) gegenüberliegenden Stelle am Spannrahmen (10, 24) angreifen.

5. Rottebehälter nach einem der Ansprüche 1 bis 4,
dadurch gekennzeichnet,
daß die Spannvorrichtungen (20, 30) als Spindeltriebe in der Art eines Spannschlosses ausgebildet sind, die manuell über eine Ratsche, einen Elektroantrieb oder ähnliches betätigbar sind, wobei die Spannvorrichtungen (20, 30) am unteren Teil des Rottebehälters (1) in Drehgelenken (21, 31) gelagert sind und mit einem Spannkopf in eine gabelförmige Spannkopfaufnahme (17 bzw. 29) einschwenkbar sind.

6. Rottebehälter nach einem der Ansprüche 1 bis 4,
dadurch gekennzeichnet,
daß die Spannvorrichtung (20, 30) als hydraulische oder pneumatische Kolben/Zylindereinheiten ausgebildet sind.

7. Rottebehälter nach einem der Ansprüche 1 bis 6,
dadurch gekennzeichnet,
daß der Spannrahmen (10) der Beladeluke (6) mindestens einen kurzen Hebelarm (11b) aufweist, der auf der Seite der Drehgelenke (15a, b, c) über die Seitenwand des Rottebehälters (1) hinausragt und daß der Hebelarm (11b) über ein Drehgelenk (18) an einer Hubvorrichtung (22) angreift, die über ein weiteres Drehgelenk (23) außen an der Seitenwand des Rottebehälters (1) befestigt ist.

8. Rottebehälter nach Anspruch 7,
dadurch gekennzeichnet,
daß die Hubvorrichtung (22) als manuell über eine Ratsche oder motorisch angetriebener Spindeltrieb oder als hydraulische oder pneumatische Kolben/Zylindereinheit ausgebildet ist.

9. Rottebehälter nach einem der Ansprüche 1 bis 8,
dadurch gekennzeichnet,
daß an den Rändern der Luken (6, 7) oder an den Auflageflächen der geschlossenen Luken (6, 7) umlaufende elastische Profildichtungen (32), insbesondere Gummidichtungen, vorgesehen sind, die in anschraubbaren Hohlprofilen gehalten sind.

## Claims

1. A mobile rotting container (1) in closed container form ( parallelepiped form ) with connections (2a, 2b) for supplying and carrying off air, with a double bottom (3) which is formed by a lower bottom plate (4) and a perforated bottom (5) arranged thereabove, with a waste-water pipe from the cavity of the double bottom (3) and with at least one loading hatch (6) in the roof as well as at least one unloading hatch (7) in a side wall of the rotting container, characterised
- in that the hatches (6, 7) are in each case suspended in swivel joints (16a, b, c or respectively 28a, b) from a tensioning frame (10, 24),
- in that the tensioning frames (10, 24) are mounted by way of swivel joints (15a, b, c or respectively 27a, b) on the outer jacket of the rotting container (1),
- in that the swivel joints (16a, b, c or respectively 28a, b) are in each case arranged along the longitudinal axes of the hatches (6 or respectively 7) and symmetrically to the transverse axes thereof and
- in that tensioning devices (20, 30) are provided with which the tensioning frames (10, 24) are in each case tensionable to produce a sealing squeezing pressure between the hatches (6, 7) and the bearing surfaces of the hatches (6, 7).

2. A rotting container according to claim 1, characterised in that only a single large loading hatch (6) is provided, which has two swivel joints (16a, b) which are in each case arranged one-quarter or somewhat less than one-quarter of the length of the loading hatch (6) away from a narrow side of the loading hatch (6).

3. A rotting container according to claim 1 or 2,
characterised in that only a single unloading hatch (7) is provided, which is arranged on a narrow side of the rotting container (1) and is provided with two swivel joints (28a, b) in the region of the horizontal centre axis of the unloading hatch (7), the spacing of the swivel joints (28a, b) from one another amounting to about one-third of the width of the unloading hatch (7), and in that the swivel joints (27a, b) of the tensioning frame (24) are fastened to the top of the rotting container (1).

4. A rotting container according to any one of claims 1 to 3, characterised in that the tensioning devices (20, 30) in each case act on the tensioning frame (10, 24) at a point lying opposite to the swivel joints (15a, b, c or respectively 27a, b).

5. A rotting container according to any one of claims 1 to 4, characterised in that the tensioning devices (20, 30) are designed as worm drives in the manner of a turnbuckle, which are actuable manually by way of a ratchet, an electric drive or the like, the tensioning devices (20, 30) being mounted in swivel joints (21, 31) on the lower part of the rotting container (1) and being able to be swung with a tensioning head into a forked tensioning head receiver (17 or respectively 29).

6. A rotting container according to any one of claims 1 to 4, characterised in that the tensioning devices (20, 30) are designed as hydraulic or pneumatic piston/cylinder units.

7. A rotting container according to any one of claims 1 to 6, characterised in that the tensioning frame (10) of the loading hatch (6) has at least one short lever arm (11b) which on the side of the swivel joints (15a, b, c) projects beyond the side wall of the rotting container (1) and in that the lever arm (11b) acts by way of a swivel joint (18) on a lifting device (22) which is fastened by way of a further swivel joint (23) to the outside of the side wall of the rotting container (1).

8. A rotting container according to claim 7, characterised in that the lifting device (22) is designed as a worm drive driven manually by way of a ratchet or by motor or as a hydraulic or pneumatic piston/cylinder unit.

9. A rotting container according to any one of claims 1 to 8, characterised in that encircling elastic profiles seals (32), in particular rubber seals, which are held in hollow profiles which can be screwed on are provided at the edges of the hatches (6, 7) or on the bearing surfaces of the closed hatches (6, 7).

## Revendications

1. Réservoir de fermentation mobile (1) en forme de conteneur fermé (forme quadratique) comportant des raccords (2a,2b) pour l'entrée et la sortie d'air, un fond double (3) formé d'une tôle de fond inférieure (4) et d'un fond perforé (5) agencé au-dessus de celle-ci avec un écartement, une évacuation des eaux usées de l'espace vide du fond double (3) et au moins un hublot de chargement (6) dans le toit, ainsi qu'au moins un hublot de déchargement (7) dans une paroi latérale du conteneur,
caractérisé :
- en ce que les hublots (6,7) sont à chaque fois suspendus à un cadre de serrage (10,24) dans des charnières (16a,b,c ou 28a,b),
- en ce que les cadres de serrage (10,24) sont montés sur l'enveloppe externe du réservoir de fermentation (1) par l'intermédiaire de charnières (15a,b,c ou 27a,b),
- en ce que les charnières (16a,b,c ou 28a,b) sont agencées, à chaque fois, le long des axes longitudinaux des hublots (6 ou 7) et symétriquement à leurs axes transversaux, et
- en ce que des dispositifs de serrage (20,30) sont prévus, par lesquels les cadres de serrage (10,24) peuvent à chaque fois être serrés, pour engendrer une pression d'étanchéification entre les hublots (6,7) et les surfaces d'appui des hublots (6,7).

2. Réservoir de fermentation selon la revendication 1,
caractérisé en ce qu'un seul et grand hublot de chargement (6) est prévu, comportant deux charnières (16a,b) qui sont, à chaque fois, agencées, en étant écartées d'un petit côté du hublot de chargement (6), d'un quart ou d'un peu moins d'un quart de la longueur du hublot de chargement (6).

3. Réservoir de fermentation selon l'une des revendications 1 ou 2,
caractérisé en ce qu'un seul hublot de déchargement (7) est prévu, qui est agencé sur un petit côté du réservoir de fermentation (1) et qui est muni de deux charnières (28a,b) dans la zone de l'axe central horizontal du hublot de déchargement (7), l'écartement des charnières (28a,b) entre elles valant à peu près un tiers de la largeur du hublot de déchargement (7), et en ce que les charnières (27a,b) du cadre de serrage (24) sont fixées en haut au réservoir de fermentation (1).

4. Réservoir de fermentation selon l'une des revendications 1 à 3,
caractérisé en ce que les dispositifs de serrage (20,30) agissent, à chaque fois, à un endroit du cadre de serrage (10,24) opposé aux charnières (15a,b,c ou 27a,b).

5. Réservoir de fermentation selon l'une des revendications 1 à 4,
caractérisé en ce que les dispositifs de serrage (20,30) sont réalisés en tant qu'entraînements à broche, à la manière d'un tendeur, qui peuvent être actionnés manuellement par l'intermédiaire d'un cliquet, par un entraînement électrique ou analogue, les dispositifs de serrage (20,30) étant montés dans la partie inférieure du réservoir de fermentation (1) dans des charnières (21,31) et pouvant être pivotés par une tête de serrage dans un récepteur de tête de serrage (17 ou 29) en forme de fourche.

6. Réservoir de fermentation selon l'une des revendications 1 à 4,
caractérisé en ce que les dispositifs de serrage (20,30) sont réalisés en tant que vérins hydrauliques ou pneumatiques.

7. Réservoir de fermentation selon l'une des revendications 1 à 6,
caractérisé en ce que le cadre de serrage (10) du hublot de chargement (6) comporte au moins un court bras de levier (11b) qui fait saillie du côté des charnières (15a,b,c) au-dessus de la paroi latérale du réservoir de fermentation (1), et en ce que le bras de levier (11b) agit, par l'intermédiaire d'une charnière (18), sur un dispositif élévateur (22) qui est fixé, à l'extérieur, sur la paroi latérale du réservoir de fermentation (1), par l'intermédiaire d'une charnière supplémentaire (23).

8. Réservoir de fermentation selon la revendication 7,
caractérisé en ce que le dispositif élévateur (22) est réalisé en tant qu'entraînement à broche entraîné manuellement par l'intermédiaire d'un cliquet ou par moteur, ou en tant que vérin hydraulique ou pneumatique.

9. Réservoir de fermentation selon l'une des revendications 1 à 8,
caractérisé en ce que des joints d'étanchéité profilés élastiques et périphériques (32), en particulier des joints de caoutchouc, qui sont maintenus dans des profilés creux pouvant être vissés, sont prévus sur les bords des hublots (6,7) ou sur les surfaces d'appui des hublots fermés (6,7).
